# EUROPEAN PATENT APPLICATION

(11) **EP 4 350 183 A1**
(43) Date of publication of application: **10.04.2024**
(21) Application number: 22810263.8
(22) Date of filing: 19.04.2022
(51) Int. Cl.: F16K 11/14, D06F 39/02

(54) **CONTROL VALVE STRUCTURE, SWITCH, AND DISPENSING DEVICE**

(30) Priority: 24.05.2021 CN 202110564540; 24.05.2021 CN 202110566068; 24.05.2021 CN 202110566062
(71) Applicant: Qingdao Haier Drum Washing Machine Co., Ltd., Qingdao, Shandong 266101 (CN); HAIER SMART HOME CO., LTD., Laoshan District Qingdao Shandong 266101 (CN)
(72) Inventor: HUANG, Tao, Qingdao, Shandong 266101 (CN); CHENG, Baozhen, Qingdao, Shandong 266101 (CN); HUANG, Bencai, Qingdao, Shandong 266101 (CN)
(74) Representative: Ziebig Hengelhaupt Intellectual Property Attorneys Patentanwaltskanzlei PartGmbB
(86) International application number: PCT/CN2022/087617
(87) International publication number: WO 2022/247530

(57) **Abstract**

A control valve structure, comprises: a housing (101), a chamber (103) forming in an inside of the housing (101), and an opening (102) communicating with the chamber (103) being provided on the housing (101), wherein, a piston (104) is arranged in the chamber (103) and capable of telescopically moving relative to the opening (102), and a driving structure for driving the movement of the piston (104) is installed on the housing (101), and used to control a sealing structure on the piston (104) to close or open the opening (102) accordingly. Through the above arrangement, the opening is opened and closed by the movement of the piston. In the movement of the piston, the sealing structures on the piston is prevented from being contact with the inner wall of the housing of switcher, which avoids the deformation and failure of the sealing structures made of elastic materials such as rubber due to friction and compression with the inner wall of the housing of the switcher during the opening and closing process. In addition, the present invention further provides a dispensing device with the control valve structure, for controlling to open or close the waterway of the dispensing device.

## Description

### Field

The invention belongs to the field of a laundry treatment appliance, relates to an additive dispensing apparatus for a washing machine, in particular to a switcher applied to an additive dispensing apparatus for a washing machine.

### Background

With the improvement of consumer's life quality, washing machine is inseparable from people's lives. In the running of washing machine, according to different programs, the additives of different types are dispensed in the washing machine by the dispensing device connected with the different waterways. So the dispensing device of washing machine needs to have a variable combination of waterways which can be switched.

However, in currently automatic dispensing devices, one pump is usually used to dispense one additive, and the more types of additives are dispensed by the more pumps. At the same time, in the current dispensing devices of washing machine, different waterways correspond one-to-one to the control valves for meeting the requirements of different washing functions.

In the above situation, to meet all functional requirements of the dispensing device of washing machine, it is usually necessary to install multiple pumps and multiple inlet valves. So, there are some disadvantages, which are a large number of electrical components, control complex, high cost, and higher failure rate.

Furthermore, for the control valves installed on existing dispensing devices, use the opening is open and close by rotating the valve core. However, during the process of rotating the valve core, it is common that the sealing components (such as sealing rings, etc.) to always abut against the inner wall of the shell, so that the sealing components are subject to excessive friction and deformation due to being abutted against the inner wall of the shell, and further the sealing components easily fails to work.

In view of this, the present invention is proposed.

### Summary

In order to solve the technical problem by the present invention and overcome the deficiencies of the prior art and provide a control valve structure. The sealing structure of the control valve structure is not pressed during the moving of the valve core, so the use life of the control valve is improved.

In order to solve the above technical problems, the basic concept of the solutions of the present invention is as follows.

A control valve structure includes: a housing, the inside of the housing is hollow to form a chamber, the housing is provided with an opening communicating with the chamber, and a piston is arranged in the chamber and can telescopically move relative to the opening. A driving structure for driving the movement of the piston is installed on the housing, and used to control a sealing structure on the piston to close or open the opening accordingly.

Further, the driving structure includes, a rotating rod, installed in the chamber and driven to rotate around an axis by a power unit; and a cam portion, arranged on the rotating rod and radially protruding outward. The cam portion and the piston at least partially overlap in the axial direction of the rotating rod, and a distance between a protruding end of the cam portion and the axis of the rotating rod is greater than half of a distance between the piston and the axis of the rotating rod.

Further, the piston is provided with a through-hole for the rotating rod to pass through, a rib radially protruding is arranged at the position of the rotating rod where the through-hole passes, and the rib constitutes the cam portion. A distance between the protruding end of the rib and the axis of the rotating rod is greater than a radius of the through-hole. The piston and the rotating rod jointly constitute a cam transmission structure. When the rotating rod rotates to a position where the rib abuts against the inner wall of the through-hole of the piston, the piston is driven to move and the sealing structure is driven to open the opening.

Further, the driving structure also includes an elastic unit between the piston and the housing, for providing an elastic reset force on the piston to make the sealing structure close the opening.

Further, the piston is a block-shaped structure extending along the axis of the opening, and a middle part of the piston with the block-shaped structure is provided with the through-hole penetrating both sides. The axis of the rotating rod is parallel to the axial direction of the through-hole and passes through the through-hole. The part of the rotating rod passing through the through-hole is provided with the rib radially protruding outward. Preferably, the axial direction of the through-hole on the piston is perpendicular to the axial direction of the opening.

Further, an end of the piston close to the opening is the sealing end, and another end away from the opening is the supporting end, a sealing ring as the sealing structure is arranged on the sealing end of the piston. Preferably, the supporting end of the piston is connected with a spring as an elastic unit, the spring is extended in the axis of the opening, and two ends of the spring are connected with the supporting end of the piston and the inner wall of the housing respectively.

Further, the sealing structure and the elastic unit are arranged coaxially with the piston.

Further, an inner peripheral wall of the through-hole in the middle of the piston is provided with a protruding portion protruding radially and toward a center of the through-hole. The protruding portion is arranged on the through-hole close to the supporting end. Preferably, the protruding portion is a triangular protrusion being inclined from the left side and the right side to the center.

Further, the inner wall of the housing facing the supporting end of the piston is provided with a limiting column being extended in the axis of the opening, and one end of the spring between the supporting end of the piston 104 and the inner wall of the housing is connected with the limiting column. Preferably, the supporting end of the piston is provided with a mounting groove which has an opening toward the limiting column. One end of the spring is inserted into the mounting groove, and the other end is sleeved on the outer peripheral wall of the limiting column.

Further, a guiding portion is arranged in the chamber, for guiding the piston to move telescopically in the axis of the opening. The inner wall of the housing is provided with a piston groove extending along the axial direction of the opening and forming the guiding portion, and the side wall of the piston is inserted into the piston groove correspondingly. Preferably, the left and right side walls of the piston opposite to each other are respectively inserted into the piston grooves on the corresponding inner wall of the housing, and the piston grooves on both sides are arranged in parallel.

Compared with the prior art, the present invention has the following remarkable effects by adopting the above-mentioned technical solutions.

Through the above arrangement, the opening is opened and closed by the movement of the piston. In the movement of the piston, the sealing structures on the piston (such as the piston, sealing ring, etc.) is prevented from being contact with the inner wall of the housing of switcher, which avoids the deformation and failure of the sealing structures made of elastic materials such as rubber due to friction and compression with the inner wall of the housing of the switcher during the opening and closing process.

The present invention provides a dispensing device, provided with the above control valve structure, for controlling to be connected with and disconnected from the waterways of the dispensing device.

In order to solve the technical problem of the present invention and overcome the deficiencies of the prior art, a switcher is provided for controlling to open and close the multiple openings in different combinations.

In order to solve the above technical problem, the present invention adopts the basic concept of technical solutions as follows.

A switcher, comprises, a housing, wherein, the inside of the housing is hollow to form a chamber, the housing is provided with a plurality of openings communicating with the chamber. A rotating rod being capable of rotating around the axis is installed in the chamber. The rotating rod is provided with a plurality of cam portions corresponding to the different openings. The cam portions drive the pistons to move telescopically relative to the openings in the one-to-one manner, for controlling the sealing structures on different pistons to close or open the openings accordingly.

Further, the cam portions are arranged on the rotating rod in a staggered manner along the axial direction of the rotating rod. Preferably, the radial protruding orientations of the cam portions relative to the axis of the rotating rod are same or different.

Further, one side of the housing of the switcher is provided with a plurality of openings, and the openings are arranged at intervals along a straight line. The axis of the rotating rod arranged in the chamber is parallel to the straight line. The rotating rod is provided with the cam portions corresponding to some or all of the openings in one-to-one manner, and each of the cam portions and the corresponding opening are in the same section.

Further, the pistons are installed at different openings, and the sealing structure is installed each of the pistons to block the opening. Each of the pistons has a through-hole, and the rotating rod passes through all through-holes in sequence. The part of the rotating rod passing through the through-hole is provided with the cam portion for driving the piston to move.

Further, the inner wall of the through-hole of the piston is provided with a protruding portion that protrudes toward the center of the through-hole and abuts against the cam portion correspondingly. The protruding portion is arranged at a side of the inner wall of the through-hole away from the opening. Preferably, a spring is arranged between the piston and the inner wall of the housing, and the spring takes a pushing force on the piston in a direction close to the opening, so the sealing ring arranged on the piston is pushed to correspondingly close the opening.

Further, the openings are respectively arranged on different walls of the housing. The openings are respectively located on different cross-sections of the housing.

Further, two or more two rotating rods are arranged in the chamber of the housing, and each of the rotating rods is provided with different or identical cam portions for controlling the pistons to telescopically move.

Further, there are the chambers in the housing, one rotating rod is arranged in each of the chambers, and at least one opening is arranged in each of the chambers. The rotating rod in each of the chamber pushes the piston to move telescopically through the cam portion, to control the opening and closing of the opening in the chambers.

Further, the housing is provided with a motor, and an output end of the motor is connected to the rotating rod directly or through a transmission structure. The motor is used to drive the rotating rod to rotate around the axis. Preferably, the end of the rotating rod penetrates the housing, and an end extending out of the housing is meshed with the output end of the motor installed outside the housing through a reduction gear assembly.

Compared with the prior art, the present invention has the following remarkable effects by adopting the above-mentioned technical solutions.

In the present invention, the rotating rod in the chamber of the switcher is controlled to rotate by an angle, and the cam portions on the rotating rod can drive the piston to move, so the different openings of the switcher can be opened and closed in variable combinations, the openings of the switcher can be switched to be communicated in variable combinations. Thereby working modes of the switcher is improved.

The present invention provides a dispensing device, provided with the switcher described as the above. The different openings of the switcher are respectively connected with the different waterways, for dispensing one or more than one additive by different waterways.

In order to solve the technical problem by the present invention and overcome the deficiencies of the prior art, and a switcher is also provided, which is prevented from be leaked in working.

In order to solve the problems of the above technical problem, the present invention adopts the basic concept of the technical solution as follows.

A switcher includes a housing, wherein, the inside of the housing is a chamber, and the housing 101 is provided with a mounting hole for the rotating rod passing through. The part of the rotating rod passing through the mounting hole is provided with two sealing rings. There is a pressure relief chamber between the outer wall of the rotating rod between the two sealing rings and the inner wall of the mounting hole, and a pressure relief port is formed on the housing for communicating the pressure relief chamber with the outside of the chamber.

Further, the outer wall of the rotating rod is provided with a groove, and an opening of the groove faces the inner wall of the mounting hole. The groove is between the two sealing rings, and the groove and the inner wall of the mounting hole forms the pressure relief chamber. The groove is arranged on the outer wall of the rotating rod, and the groove can be extended continuously or discontinuously to form at least one circle.

Further, a groove is provided on the inner wall of the mounting hole. The opening of the groove faces the outer wall of the rotating rod. The groove is between the two sealing rings. The groove and the outer wall of the rotating rod form the pressure relief chamber. The groove is arranged on the inner wall of the mounting hole, and the groove can be at least one circle by extending continuously or discontinuously.

Further, the outer wall of the two ends of the part where the rotating rod passes through the mounting hole is respectively sleeved with one sealing ring. The inner side and the outer side of the sealing ring are respectively contact with the outer wall of the rotating rod and the inner wall of the mounting hole in a sealed manner. The sealing ring arranged near to the chamber is as an inner sealing ring, and the sealing ring arranged far away from the chamber is as an outer sealing ring. The pressure relief chamber is located between the inner sealing ring and outer sealing ring, and is communicated with the space between the inner and outer sealing ring.

Further, the inner wall of the mounting hole is provided with a notch radially and outwardly recessed, and the notch is in the same section with the inner sealing ring. The notch is used to communicate with both sides of the inner sealing ring. Preferably, notches are arranged at intervals on the inner wall of the mounting hole along the circumferential direction.

Further, the housing of the switcher is provided with a high-pressure chamber and a low-pressure chamber that are independent from each other. The rotating rod is arranged in the high-pressure chamber, the part of the rotating rod penetrating out the high-pressure chamber is provided with the pressure relief chamber, and the pressure relief port of the pressure relief chamber is communicated with the low-pressure chamber through a pressure relief channel.

Further, a second rotating rod is provided in the low-pressure chamber, an end of the second rotating rod is in the outside of the low-pressure chamber, and a sealing ring is provided on the outer peripheral wall of the part of the second rotating rod being in the outside of the low-pressure chamber. The low-pressure chamber is provided with a communication port for communicating with the pressure relief channel, and the communication port is set close to the center of the low-pressure chamber relative to the sealing ring.

Further, the low-pressure chamber communicates with the external atmosphere through the pressure relief port in which the pressure relief valve is installed. Preferably, the pressure relief port is close to the communication port.

Further, the inside of the housing is a chamber, the openings communicating with the chamber are arranged on the housing, and a rotating rod being capable of rotating around the axis is arranged in the chamber. The rotating rod is provided with multiple cam portions corresponding to different openings. The cam portions respectively drive the pistons corresponding one-to-one to the openings to telescopically move, for controlling the sealing structures on the pistons to close or open the openings.

Compared with the prior art, the present invention has the following remarkable effects by adopting the above-mentioned solutions.
1. Through the above arrangement, if the sealing ring of the switcher fails to work, the water leaked from the position where the rotating rod penetrates out can be guided to flow to other positions through the pressure relief chamber, so it is effectively avoided to leak water at the position where the rotating rod penetrates out. At the same time, by connecting the pressure relief chamber to the outside of the chamber through the pressure relief port, the pressure in the chamber through which the rotating rod penetrates out is significantly reduced, it is further effectively avoided to leak water at the position where the rotating rod penetrates out.

The present invention also provides a dispensing device, provided with the switcher described as the above. The openings of the switcher are respectively connected with different waterways for controlling to dispense one or more than one additive to different waterways.

Simultaneously, the present invention is simple in structure, and effect is remarkable, and it is popularly applied.

The specific implementation manners of the present invention are further described in detail below in conjunction with the accompanying drawings.

### Description of drawings

Accompanying drawings, constituting a part of the present disclosure, are used for providing a further understanding of the present disclosure, schematic embodiments of the present disclosure and description thereof are used for explaining the present disclosure, and do not constitute an improper limitation on the present disclosure. Apparently, the accompanying drawings in the following description are only some embodiments, for those ordinarily skilled in the art, on the premise of no creative labor, other accompanying drawings can further be obtained from these accompanying drawings. In the figures:
Fig. 1 is a structural diagram of a switcher in an embodiment of the present invention;
Fig. 2 is a top view of the structural diagram of a switcher in an embodiment of the present invention;
Fig. 3 is a structural diagram of the A-A section of Fig. 2 in an embodiment of the present invention;
Fig. 4 is a structural diagram of the B-B section of Fig. 2 in an embodiment of the present invention;
Fig. 5 is an enlarged diagram at place C of Fig. 3 in an embodiment of the present invention;
Fig. 6a to Fig. 6d are enlarged diagrams of at place D in Fig. 4 of the rotating rod rotating to different positions in the embodiment of the present invention;
Fig. 7 is a structural diagram of the switcher, of which the cover plate of the pressure relief channel is removed, in the embodiment of the present invention;
Fig. 8 is a top view of a structural diagram of the switcher, of which the cover plate of the pressure relief channel is removed, in the embodiment of the present invention;
Fig. 9 is a structural diagram of the E-E section of Fig. 8 in an embodiment of the present invention.

Description of main components in the figures: 100, switcher; 101, housing; 102, opening; 103, chamber; 104, piston; 105, elastic unit; 106, sealing structure; 107, guiding portion; 108, rotating rod; 109 , cam portion; 110, motor; 111, high-pressure chamber; 112, low-pressure chamber; 113, inner sealing ring; 114, outer sealing ring; 115, pressure relief chamber; 116, groove; 117, pressure relief port; 118, pressure relief channel; 119, communication port; 120, mounting hole; 121, reduction gear set; 122, pressure relief valve; 123, limiting column; 124, mounting groove; 125, sealing ring; 126, piston head; 127, protruding portion.

It should be noted that these figures and descriptions are not intended to limit the concept scope of the present invention in any way, but illustrate the concept of the present invention for those skilled in the art by referring to specific embodiments.

### Embodiments

In order to make objects, technical solutions and advantages of the embodiments of the present invention clearer, the solutions in the embodiments are clearly and completely described as follows in combination with accompanying drawings in the embodiments of the present invention. The following embodiments are used for illustrating the present invention, rather than limiting the scope of the present invention.

In the description of the present invention, it should be noted that, the orientation or positional relationship indicated by such terms as "up", "down", "front", "rear", "left", "right", "vertical", "inner" and "outer" is the orientation or positional relationship based on the accompanying drawings. Such terms are merely used for conveniently and simplified describing the present invention, rather than indicating or implying that the device or element referred to must be located in a certain orientation or must be constructed or operated in a certain orientation. Therefore, the terms cannot be understood as a limitation to the present invention.

In the description of the present invention, it should be noted that, unless otherwise stipulated and defined definitely, such terms as "installed", "connected" and "in connection" should be understood in their broad sense, e.g., the connection can be a fixed connection, a detachable connection or an integral connection; can be mechanical connection or electrical connection; and can be direct connection or can be indirect connection through an intermediate. For those skilled in the art, specific meanings of the above terms in the present invention can be understood according to specific conditions.

A switcher 100 is described in Embodiments, and is used for switching directions with respective to different flow channels, water channels, and air channels, so as to achieve the effect of switching and adjusting the fluid flow direction. For example: the switcher 100 is installed on the additive dispensing apparatus of the washing machine, so that one or a combined of different types of additives can be selected to be fed, or/and one type or a combined types of additives can be dispensed in the washing machine through different water pathways and in different feeding manners.

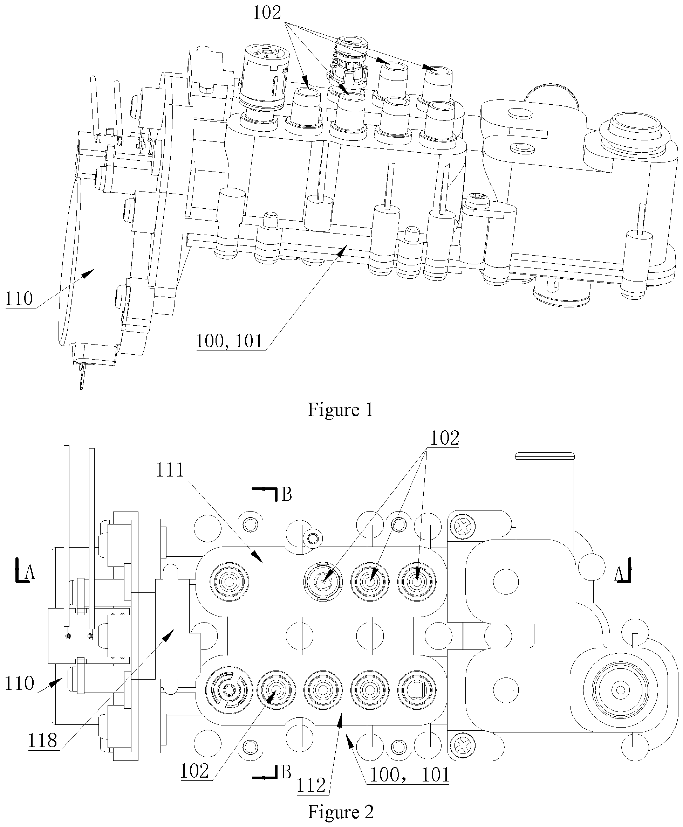

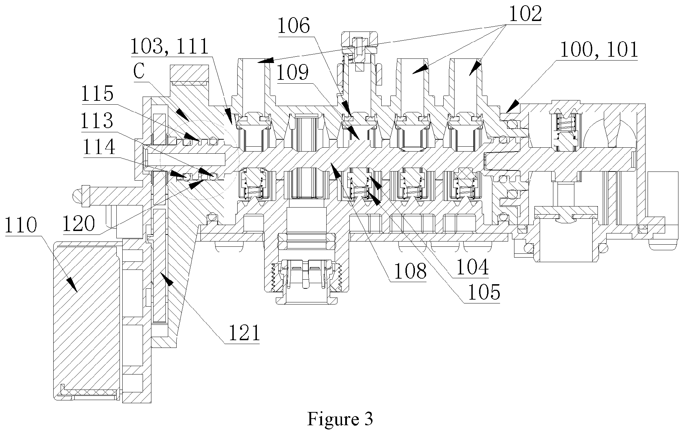

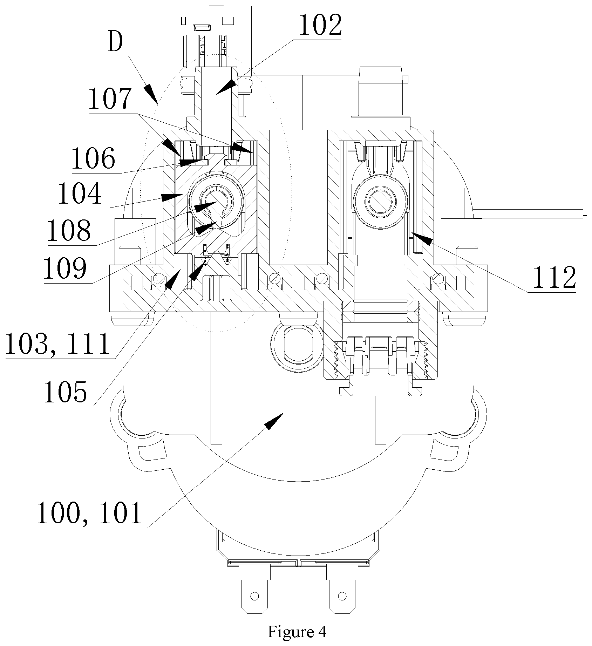

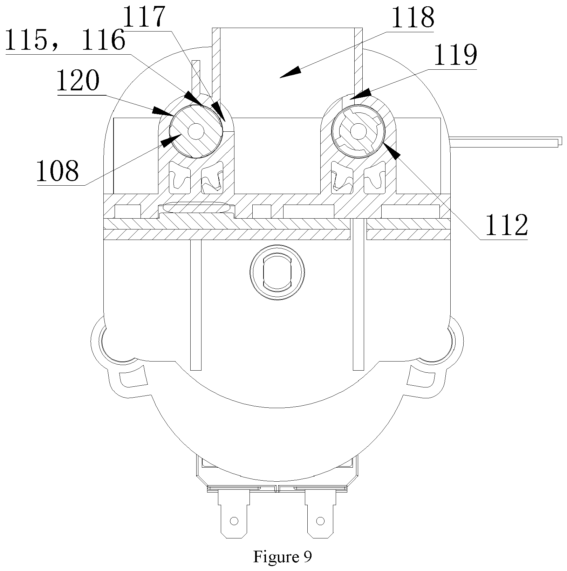

As shown in Figures 1 to 9, in the embodiment of the present invention, the switcher 100 has a housing 101, and the inside of the housing 101 is hollow to form a chamber 103. The housing 101 has a plurality of openings 102, and each of the openings 102 is communicated with the chamber 103. Some or all of the openings 102 are respectively provided with pistons 104 one by one for opening and closing the openings 102. The pistons 104 are driven to get displacements by the camshaft arranged on the switcher 100, so different openings 102 are controlled to be open and close, and the openings 102 of the switcher 100 are switched to be open or close in combination manners.

In the embodiment of the present invention, the camshaft is a rotating rod 108 installed in the chamber 103 of the housing 101 that can rotate around the shaft. A cam portion 109 arranged on the rotating rod 108 drives the piston to move, so the openings are controlled to be open and close.

In the present invention, since the opening 102 of the switcher 100 is controlled to be open and close by the movement of the piston 104, the sealing structure 106 (for example, a sealing ring, etc.) on the piston 104 is not in contact with the inner wall of the housing 101 of the switcher 100. So the situation is avoided, that the failure is resulted from the deformation the sealing structure 106 made of elastic materials such as rubber caused by friction and extrusion with the inner wall of the housing 101 of the switcher 100 during the opening and closing process.

### Embodiment 1

As shown in Figures 1 to 6, a control valve structure is described in this embodiment, and the control valve structure can be a control device for controlling to open and close the opening 102 of the switcher 100. It can also be used separately, is used in the other devices.

In this embodiment, the control valve structure includes: a housing 101, the inside of the housing 101 is hollow to form a chamber 103, the housing 101 is provided with an opening 102 communicating with the chamber 103, and a piston 104 is arranged in the chamber 103, which can telescopically move relative to the opening. A driving structure for driving the movement of the piston 104 is installed on the housing 101, and is used to control the sealing structure 106 on the piston 104 to close or open the opening 102 accordingly.

As shown in Figures 1 to 6, in this embodiment, the driving structure includes, the rotating rod 108 installed in the chamber 103 and driven to rotate around an axis by the power unit.

The rotating rod 108 is provided with a cam portion 109 radially protruding outward, the cam portion 109 and the piston 104 at least partially overlap in the axial direction of the rotating rod 108. The distance between the protruding end of the cam portion 109 and the axis of the rotating rod 108 is greater than half of the distance between the piston 104 and the axis of the rotating rod 108, so that the cam portion 109 can be used to drive the piston 104 to produce telescopic movement during the rotating process of the rotating rod 108.

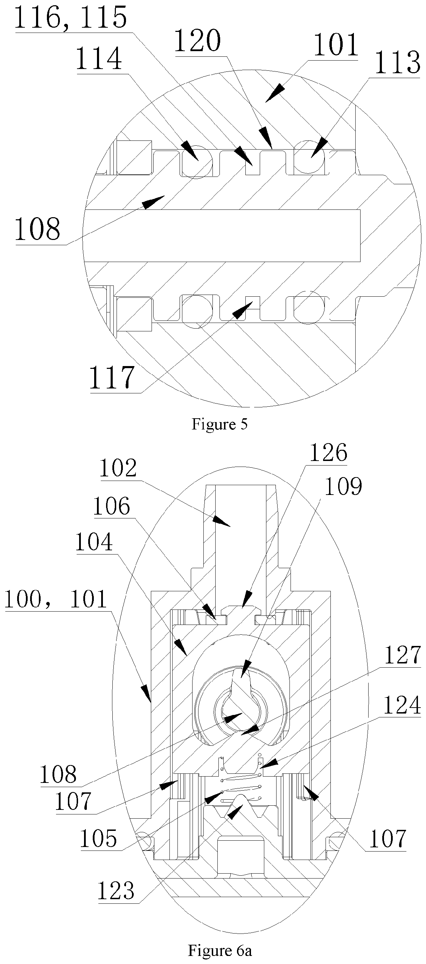

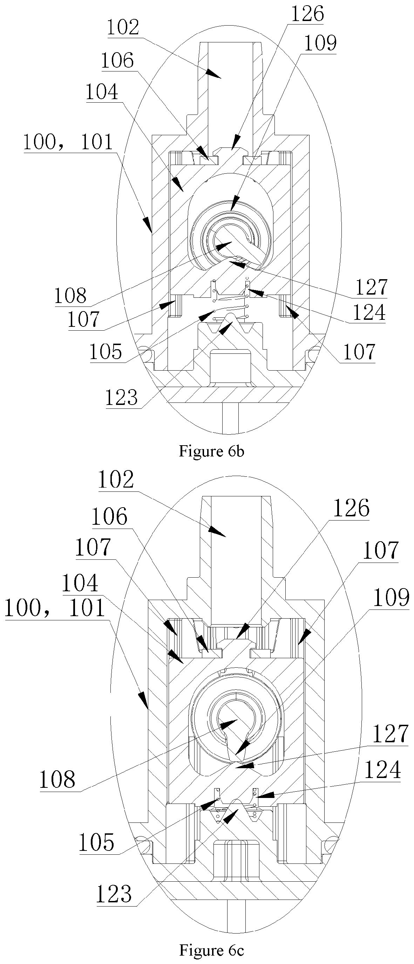

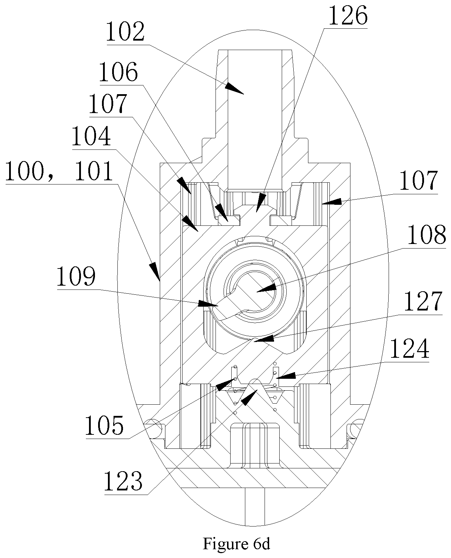

As shown in Figures 6a to 6d, in this embodiment, the piston 104 is provided with a through-hole for the rotating rod 108 to pass through, a rib radially protruding is arranged at the position of the rotating rod 108 where the through-hole passes, and the rib constitutes the cam portion 109.The piston 104 and the rotating rod 108 jointly constitute a cam transmission structure. When the rotating rod 108 rotates to a position where the rib abuts against the inner wall of the through-hole of the piston 104, the piston 104 is driven to move and the sealing structure 106 is driven to open the opening.

In this embodiment, the driving structure further includes an elastic unit 105 which is clamped between the piston 104 and the housing 101, and provides an elastic reset force on the piston 104 to make the sealing structure 106 close the opening. So when the rotating rod 108 rotates to a position where the rib is separated from the inner wall of the through-hole of the piston 104, the elastic unit 105 pushes the piston 104 to move to make the sealing structure 106 block the opening 102 correspondingly. In this embodiment, the elastic unit 105 can be a spring, a pneumatic cylinder, a hydraulic cylinder, etc., and can be any one device or a combination of devices which can provide elastic restoring force. Preferably, the elastic unit 105 in this embodiment uses a spring.

As shown in Figures 1 to 6, in this embodiment, the piston 104 is a block-shaped structure extending along the axis of the opening 102, and the middle part of the piston 104 with the block-shaped structure is provided with the through-hole penetrating both sides. The axis of the rotating rod 108 is parallel to the axial direction of the through-hole and passes through the through-hole. The part of the rotating rod 108 passing through the through-hole is provided with the rib radially protruding outward, and the rib constitutes the cam portion 109 for driving the piston 104 to move telescopically.

In this embodiment, the axial direction of the through-hole on the piston 104 is perpendicular to the axial direction of the opening 102, so that a driving force in the rotation direction of the rotating rod 108is transmitted to the piston 104 through the cam portion, and then the piston 104 can have a displacement along the radial direction of the rotating rod 108.Thereby the piston 104 telescopically moves in the axial direction of the opening 102, and correspondingly opens and closes the opening 102 by using the sealing structure on the piston 104.

In this embodiment, an end of the piston 104 close to the opening 102 is the sealing end, and the other end away from the opening 102 is the supporting end. The sealing structure 106 is arranged on the sealing end of the piston 104, the sealing structure 106 is a sealing ring 125 made of elastic materials such as rubber, and the sealing ring 125 is arranged coaxially with the opening 102 and is in sealing contact with the inner wall of the chamber 103 on the periphery of the opening 102.Thereby the opening 102 is hermetically closed. In this embodiment, the sealing end of the piston 104 is provided with a cylindrical piston head protruding outward in the axis of the opening. The sealing ring 125 is installed on the outer periphery of the piston head 126 and is fixed on the piston head 126 by an annular rib radially protruding on the piston head 126.

In this embodiment, the supporting end of the piston 104 is connected with a spring as the elastic unit 105.The spring is extended in the axis of the opening 102, and the two ends of the spring are connected with the supporting end of the piston 104 and the inner wall of the housing 101 respectively.

Preferably, in this embodiment, the sealing structure 106 and the elastic unit 105 are arranged coaxially with the piston 104, so that there is no deviation during the movement of the piston and the sealing is improved. Further preferably, the sealing structure 106, the elastic unit 105, and the piston 104 are all arranged coaxially with the opening 102.

In this embodiment, the inner peripheral wall of the through-hole in the middle of the piston 104 is provided with a protruding portion 127 protruding radially and toward the center of the through-hole. The protruding portion 127 is arranged on the through-hole close to the supporting end, so the cam portion 109 of the rotating rod 108effectively pushes the piston 104 to effectively move due to the protruding portion 127, and the telescopic movement distance of the piston 104 is increased. Correspondingly, the sealing structure 106 on the piston 104 is controlled to effectively open and close the opening 102.

Preferably, as shown in Figures 6a to 6d, in this embodiment, the protruding portion 127 is a triangular protrusion being inclined from the left side and the right side to the center, so that the inclined surfaces on both sides can effectively guide the cam portion 109, and the situations such as imbalance are avoided during the movement of the piston 104.

As shown in Figures 6a to 6d, in this embodiment, the inner wall of the housing 101 facing the supporting end of the piston 104 is provided with a limiting column 123 that is extended in the axis of the opening 102, and one end of the spring between the supporting end of the piston 104 and the inner wall of the housing 101 is connected with the limiting column 123. In this embodiment, the supporting end of the piston 104 is provided with a mounting groove 124 which has an opening toward the limiting column 123. One end of the spring as the elastic unit 105 is inserted into the mounting groove 124, and the other end is sleeved on the outer peripheral wall of the limiting column 123.

As shown in Figures 1 to 6, in this embodiment, in the chamber 103 is provided with a guiding portion 107 which guides the piston 104 to move telescopically in the axis of the opening 102, so that the piston 104 does not telescopically move in the other directions, and can only be move in the axial direction of the opening 102.Thereby it is effectively avoided that the position of the piston 104 is deviated to not be driven by the rotating rod 108.

In this embodiment, the inner wall of the housing 101 is provided with a piston groove extending along the axial direction of the opening 102 and forming the guiding portion 107, and the side wall of the piston 104 is inserted into the piston groove correspondingly. The side wall of the piston 104 inserted into the piston groove is the wall except the sealing end of the piston and the supporting end. Preferably, the side wall of the piston 104 is parallel to the axial direction of the rotating rod 108.

In this embodiment, the left and right side walls of the piston 104 opposite to each other are respectively inserted into the piston grooves on the corresponding inner wall of the housing 101, and the piston grooves on both sides are arranged in parallel and extended in a direction parallel with the axis of the opening 102. Preferably, the piston grooves arranged on two sides is in the same section with the axis of the opening 102, to ensure that the piston 104 is kept in the axial section of the opening 102.Thereby it is effectively avoided to occur the deviation in the movement of the piston 104.

### Embodiment 2

As shown in Figures 1 to 9, a switcher 100 is described in this embodiment, including: a housing 101, the inside of the housing 101 is hollow to form a chamber 103.The housing 101 is provided with a plurality of openings 102 communicating with the chamber 103. A rotating rod 108 being capable of rotating around the axis is installed in the chamber 103. The rotating rod 108 is provided with a plurality of cam portions 109 corresponding to the different openings 102. The cam portions 109 drive the pistons 104 to move telescopically relative to the openings 102 in the one-to-one manner, for controlling the sealing structures 106 on different pistons 104 to close or open the openings 102 accordingly.

In this embodiment, the valve body structure described in the above-mentioned embodiment is arranged at each opening 102 of the switcher 100 to control the opening and closing of the opening 102, so as to control the openings 102 to be opened or closed by using a single rotating rod 108.

As shown in Figures 1 to 3, in this embodiment, the cam portions 109 are arranged on the rotating rod 108 in a staggered manner along the axial direction of the rotating rod 108, and the cam portions 109 are in a one-to-one correspondence with cross-sections of the openings 102, so the opening 102 is effectively controlled to be open and close.

Preferably, in this embodiment, the radial protruding orientations of the cam portions 109 relative to the axis of the rotating rod 108 are same or different. When the rotating rod 108 rotates around the axis to an orientation, the cam portions 109 drive the pistons 104at different openings 102 to move to separately or simultaneously open the openings.

In this embodiment, one side of the housing 101 of the switcher 100 is provided with a plurality of openings 102, and the openings 102 are arranged at intervals along a straight line. The axis of the rotating rod 108 arranged in the chamber 103 is parallel to the above-mentioned straight line. The rotating rod 108 is provided with the cam portions 109 corresponding to some or all of the openings 102 in one-to-one manner, and each of the cam portions 109 and the corresponding opening 102 are in the same section.

In this embodiment, the pistons 104 are respectively arranged at the openings 102 of the housing 101 of the switcher 100, and each of the pistons 104 is provided with the sealing structure 106 for blocking the opening 102. Each of the pistons 104 is provided with a through-hole, the rotating rod 108 passes through the through-hole in turn, and the part of the rotating rod 108 passing through the through-hole is provided with a cam portion 109 for driving the corresponding piston 104 to move.

In this embodiment, the inner wall of the through-hole of the piston 104 is provided with a protruding portion 127 that protrudes toward the center of the through-hole and abuts against the cam portion 109 correspondingly. The protruding portion 127 is arranged at a side of the inner wall of the through-hole away from the opening 102. Preferably, in this embodiment, an elastic unit 105 composed of a spring is provided between the piston 104 and the inner wall of the housing 101, and the spring takes a pushing force on the piston 104 in a direction close to the opening 102, so the sealing structure 106 such as the sealing ring arranged on the piston 104 is pushed to correspondingly close the opening 102.

This embodiment can also be set as follows. The openings 102 are respectively arranged on different walls of the housing 101 of the switcher 100. The moving directions of the pistons 104 arranged at the openings 102on the different walls are set differently. However it should be ensured as follows. The axes of the openings 102 on the side walls of the housing 101 of the switcher 100 are all perpendicular to the axis of the rotating rod 108. In order to ensure the opening and closing effect, it is preferable to adopt a vertical arrangement. But only for controlling to open and close the openings, it is only necessary that the axes of the openings 102 are intersected with the axis of the rotating rod 108. By the above arrangement, one rotating rod 108 is used to control to open and close the openings 102 on different walls, so as to switch the opening and closing status of the openings 102 in combination manner (not shown in the drawings).

In this embodiment, the switcher can also be set as follows. Two or more two rotating rods 108 are arranged in the chamber 103 of the housing 101,and each of the rotating rods 108 is provided with different or identical cam portions 109 for controlling the pistons 104 to telescopically move. The same opening 102 can be controlled to open or close by different rotating rods 108, or the different openings 102 are respectively controlled to open or close by different rotating rods 108, so that it is further increased in the number of the combination of opening and closing of the openings 102 of the switcher 100 (not indicated in the drawings).

In this embodiment, the switcher can also be set as follows. As shown in Figures 1 to 9, there are the chambers in the housing 101, at least one rotating rod 108 is arranged in each of the chambers 103, and at least one opening 102 is arranged in each of the chambers 103. The rotating rod 108 in each of the chamber pushes the piston 104 to move telescopically through the cam portion 109, to control the opening and closing of the opening 102 in the chamber 103. So the switcher 100 can separately control two or more passages.

As shown in Figures 1 to 9, in this embodiment, the housing 101 is provided with a motor 110, and the output end of the motor 110 is connected to the rotating rod 108 directly or through a transmission structure. The motor is used to drive the rotating rod 108 to rotate around the axis and control the rotation angle of the rotation rod 108, so the rotation orientation of the rotation rod 108 is precisely controlled. When the rotation rod 108 is rotated to different orientations, the cam portions 109 push different pistons 104 to move to control the different openings 102on the switcher 100 to be open and close respectively.

Preferably, in this embodiment, the end of the rotating rod 108 penetrates the housing 101, and the end extending out of the housing is meshed with the output end of the motor 110 installed outside the housing through the reduction gear assembly 121, so as to accurately control the rotation of the rotating rod 108 and improve the accuracy control of the switcher 100.

### Embodiment 3

As shown in Figures 1 to 9, a switcher 100 is described in this embodiment, including a housing 101 of which the inside is provided with a hollow chamber 103.The housing 101 is provided with a mounting hole 120 for the rotating rod 108 passing through. The part of the rotating rod 108 passing through the mounting hole 120 is provided with two sealing rings in turn. There is a pressure relief chamber 115 between the outer wall of the rotating rod 108 between the two sealing rings and the inner wall of the mounting hole 120, and a pressure relief port 117 is formed on the housing 101 for communicating the pressure relief chamber 115 with the outside of the chamber 103.

Through the above settings, if the sealing ring of the switcher 100 does no work, the water from the place where the rotating rod 108 passes through the mounting hole can be diverted to other positions through the pressure relief chamber 115, so it is effectively avoided that the water is directly leaked from the place where the rotating rod 108 passes through. At the same time, by communicating the pressure relief chamber with the outside of the chamber through the pressure relief port, the pressure in the chamber where the rotating rod passes through the mounting hole is significantly reduced, thereby effectively preventing water from leaking from the chamber where the rotating rod passes through.

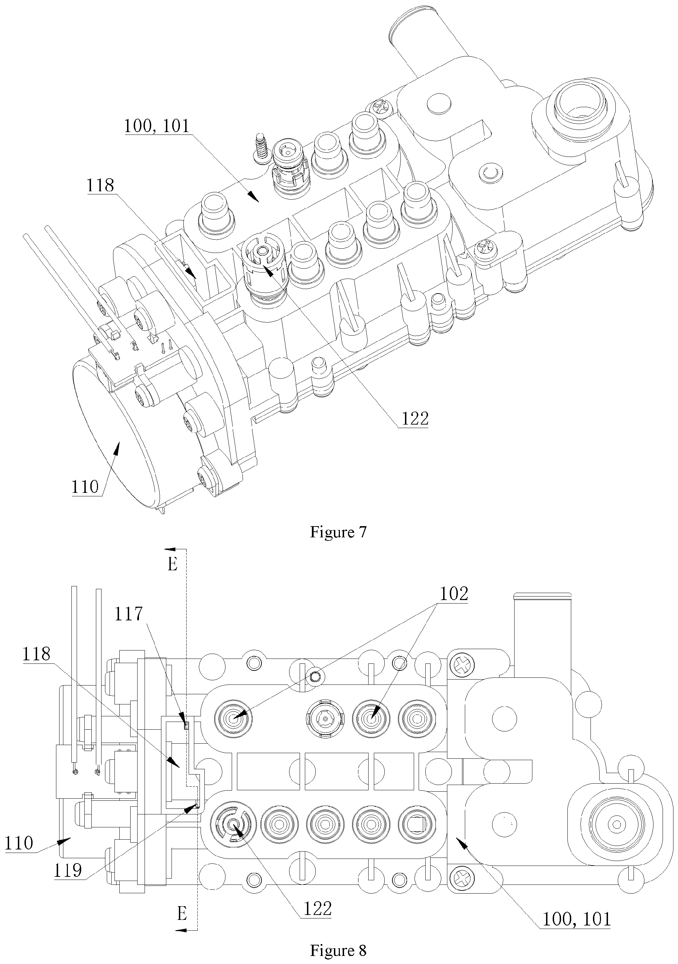

As shown in Figures 7 to 9, in this embodiment, the outer wall of the rotating rod 108 is provided with a groove 116, and the opening of the groove 116 faces the inner wall of the mounting hole 120.The groove 116 is between the two sealing rings, and the groove 116 and the inner wall of the mounting hole 120 forms the pressure relief chamber 115.The groove 116 is arranged on the outer wall of the rotating rod 108, and the groove 116 can be extended continuously or discontinuously to form at least one circle.

It is also possible in this embodiment that a groove 116 is provided on the inner wall of the mounting hole 120. The opening of the groove 116 faces the outer wall of the rotating rod 108. The groove 116 is between the two sealing rings. The groove 116 and the outer wall of the rotating rod 108 form the pressure relief chamber 115.The groove 116 is arranged on the inner wall of the mounting hole 120, and the groove 116 can be at least one circle by extending continuously or discontinuously, which can also achieve the above purpose.

In this embodiment, the outer wall of the two ends of the part where the rotating rod 108 passes through the mounting hole 120 is respectively sleeved with one sealing ring. The inner side and the outer side of the sealing ring are respectively contact with the outer wall of the rotating rod 108 and the inner wall of the mounting hole 120in a sealed manner. The sealing ring arranged near to the chamber 103 is as an inner seal ring 113, and the sealing ring arranged far away from the chamber 103 is as an outer seal ring 114.The pressure relief chamber 115 is located between the inner and outer seal rings113, 114, and is communicated with the space between the inner and outer seal ring 113, 114 are communicated.

In this embodiment, the inner wall of the mounting hole 120 is provided with a notch radially and outwardly recessed, and the notch is in the same section with the inner sealing ring 113.The notch is used to communicate with both sides of the inner sealing ring 1 13.Preferably, notches are arranged at intervals on the inner wall of the mounting hole 120along the circumferential direction. By the arrangement of the notches on the inner wall of the mounting hole 120 for communicating the two sides of the inner sealing ring 113, part of the water in the chamber 103 can flow into the pressure relief chamber 115 through the notches, so that water pressure in the chamber close to the place where the rotating rod 108 passes through is reduced, and the leakage faults are effectively reduced in the switcher 100.

As shown in Figures 7 to 9, in this embodiment, the housing 101 of the switcher 100 is provided with a high-pressure chamber 111 and a low-pressure chamber 112 that are independent from each other. The rotating rod 108 is arranged in the high-pressure chamber 111, the part of the rotating rod 108 passing through the high-pressure chamber 111 is provided with a pressure relief chamber 115, and the pressure relief port 117 of the pressure relief chamber 115 is communicated with the low-pressure chamber 112 through a pressure relief channel 118. Through the above arrangement, the water flowing out of the pressure relief chamber 115 can all flow into the low-pressure chamber 112, realizing the effective collection of water flow by relieving the pressure. At the same time, it can also effectively reduce the water pressure at the place of the high-pressure chamber 111 where the rotating rod 108 passes through, and it is effectively avoided to occur the situations, such as leakage of the water flow from the place where the rotating rod 108 passes through.

In this embodiment, a second rotating rod is provided in the low-pressure chamber 112, the end of the second rotating rod is in the outside of the low-pressure chamber 112, and a sealing ring is provided on the outer peripheral wall of the part of the second rotating rod 112 being in the outside of the low-pressure chamber. The low-pressure chamber 112 is provided with a communication port 119 for communicating with the pressure relief channel 118, and the communication port 119 is set close to the center of the low-pressure chamber 112 relative to the sealing ring, so that the liquid flowing out of the high-pressure chamber through the pressure relief channel can flow into the low-pressure chamber, and the water flow is effectively collected by relieving the pressure.

In this embodiment, the low-pressure chamber 112 communicates with the external atmosphere through the pressure relief port in which the pressure relief valve 122 is installed, so as to reduce the air pressure in the low-pressure chamber and be consistent with the external atmosphere. Preferably, the pressure relief port is close to the communication port 119.

In this embodiment, the structure of the switcher 100 is as the descriptions in Embodiment 1 or 2, and has the technical features of the switcher described in Embodiment 1 or 2.

### Embodiment 4

This embodiment introduces a dispensing device, which is provided with the switcher described in any of the above-mentioned Embodiments. The different openings of the switcher are respectively connected with different waterways of the dispensing device to control one of or more than one of the different additives to be dispensed to different waterways, so as to increase the dispensing manners of the delivery device.

The above description is only a preferred embodiment of the present invention, and does not limit the present invention. Although the present invention has disclosed preferred embodiments, it is not intended to limit the present invention. Without departing from the scope of the technical solution of the present invention, anyone in the field of this patent invention can be hinted to make some changes or modifications as equivalent embodiments by the above technical content. The implementations in the above embodiments can be further combined or replaced. Any simple modification, equivalent change and modification made to the above embodiments according to the substantive content of the present invention still belong to the scope of the solution of the present invention.

## Claims

1. A control valve structure, comprising: a housing, a chamber forming in an inside of the housing, and an opening communicating with the chamber being provided on the housing, wherein,
a piston is arranged in the chamber and capable of telescopically moving relative to the opening, and
a driving structure for driving the movement of the piston is installed on the housing, and used to control a sealing structure on the piston to close or open the opening accordingly.

2. The control valve structure according to claim 1, wherein, the driving structure comprises, a rotating rod, installed in the chamber and driven to rotate around an axis by a power unit; and
a cam portion, arranged on the rotating rod and radially protruding outward; wherein,
the cam portion and the piston at least partially overlap in the axial direction of the rotating rod, and a distance between a protruding end of the cam portion and the axis of the rotating rod is greater than half of a distance between the piston and the axis of the rotating rod.

3. The control valve structure according to claim 2, wherein, the piston is provided with a through-hole for the rotating rod to pass through, a rib radially protruding is arranged at a position of the rotating rod where passing through the through-hole, and the rib constitutes the cam portion;
a distance between the protruding end of the rib and the axis of the rotating rod is greater than a radius of the through-hole;
the piston and the rotating rod jointly constitute a cam transmission structure; and
when the rotating rod rotates to a position where the rib abuts against an inner wall of the through-hole of the piston, the piston is driven to move and the sealing structure is driven to open the opening.

4. The control valve structure according to claim 2 or 3, wherein, the driving structure comprises an elastic unit between the piston and the housing, for providing an elastic reset force on the piston to make the sealing structure close the opening.

5. The control valve structure according to claim 2 or 3, wherein, the piston is a block-shaped structure extending along the axis of the opening, and a middle part of the piston with the block-shaped structure is provided with the through-hole penetrating both sides;
the axis of the rotating rod is parallel to the axial direction of the through-hole and passes through the through-hole; and
the part of the rotating rod passing through the through-hole is provided with the rib radially protruding outward;
preferably, the axial direction of the through-hole on the piston is perpendicular to the axial direction of the opening.

6. The control valve structure according to claim 5, wherein, an end of the piston close to the opening is the sealing end, and another end away from the opening is the supporting end, a sealing ring as the sealing structure is arranged on the sealing end of the piston;
preferably, the supporting end of the piston is connected with a spring as an elastic unit, the spring is extended in the axis of the opening, and two ends of the spring are connected with the supporting end of the piston and the inner wall of the housing respectively;
more preferably,, the sealing structure and the elastic unit are arranged coaxially with the piston.

7. The control valve structure according to claim 6, wherein, an inner peripheral wall of the through-hole in the middle of the piston is provided with a protruding portion protruding radially and toward a center of the through-hole, and the protruding portion is located on a position in the through-hole close to the supporting end;
preferably, the protruding portion is a triangular protrusion being inclined from a left side and a right side to a center.

8. The control valve structure according to claim 6, wherein, the inner wall of the housing facing the supporting end of the piston is provided with a limiting column being extended in the axis of the opening, and one end of the spring between the supporting end of the piston and the inner wall of the housing is connected with the limiting column;
preferably, the supporting end of the piston is provided with a mounting groove having an opening toward the limiting column, one end of the spring is inserted into the mounting groove, and the other end is sleeved on the outer peripheral wall of the limiting column.

9. The control valve structure according to any one of claims 1 to 8, wherein, a guiding portion is arranged in the chamber, for guiding the piston to move telescopically in the axis of the opening;
preferably, the inner wall of the housing is provided with a piston groove extending along the axial direction of the opening and forming the guiding portion, and a side wall of the piston is inserted into the piston groove;
more preferably, a left side wall and a right side wall of the piston opposite to each other are respectively inserted into the piston grooves on the inner wall of the housing, and the piston grooves on both sides are arranged in parallel.

10. A dispensing device, comprising the control valve structure according to any one of claims 1 to 9, for controlling to be connected with and disconnected from the waterways of the dispensing device.

11. A switcher, comprising, a housing, a chamber forming in an inside of the housing, and openings communicating with the chamber being provided on the housing, wherein,
a rotating rod being capable of rotating around an axis is installed in the chamber, the rotating rod is provided with a plurality of cam portions corresponding to the openings;
the cam portions are capable of driving pistons to move telescopically relative to the openings in one-to-one manner, for controlling sealing structures on the pistons to close or open the openings accordingly.

12. The switcher according to claim 11, wherein, the cam portions are arranged on the rotating rod in a staggered manner along an axial direction of the rotating rod;
preferably, the radial protruding orientations of the cam portions relative to the axis of the rotating rod are same or different.

13. The switcher according to claim 12, wherein, one side of the housing of the switcher is provided with a plurality of openings, and the openings are arranged at intervals along a straight line;
the axis of the rotating rod arranged in the chamber is parallel to the straight line;
the rotating rod is provided with the cam portions corresponding to some or all of the openings in one-to-one manner, and each of the cam portions and the corresponding opening are in the same section.

14. The switcher according to claim 13, wherein, the pistons are installed at the openings, and a sealing structure is installed each of the pistons to block the opening;
each of the pistons has a through-hole, and the rotating rod passes through all through-holes in sequence; and
the part of the rotating rod passing through the through-hole is provided with the cam portion for driving the piston to move.

15. The switcher according to claim 14, wherein, an inner wall of the through-hole of the piston is provided with a protruding portion that protrudes toward the center of the through-hole and abuts against the cam portion correspondingly;
the protruding portion is arranged at a side of the inner wall of the through-hole away from the opening;
preferably, a spring is arranged between the piston and the inner wall of the housing, and the spring takes a pushing force on the piston in a direction close to the opening, so the sealing ring arranged on the piston is pushed to correspondingly close the opening.

16. The switcher according to claim 12, wherein, the openings are respectively arranged on different walls of the housing, the openings are respectively located on different cross-sections of the housing.

17. The switcher according to any one of claims 11-16, wherein, two or more two rotating rods are arranged in the chamber of the housing, and each of the rotating rods is provided with different or identical cam portions for controlling the pistons to telescopically move.

18. The switcher according to any one of claims 11-17, wherein, there are the chambers in the housing, one rotating rod is arranged in each of the chambers, and at least one opening is arranged in each of the chambers;
the rotating rod in each of the chamber pushes the piston to move telescopically by the cam portion, to control the opening and closing of the opening in the chambers.

19. The switcher according to any one of claims 11-18, wherein, the housing is provided with a motor, and an output end of the motor is connected to the rotating rod directly or through a transmission structure; the motor is used to drive the rotating rod to rotate around the axis;
preferably, the end of the rotating rod penetrates the housing, and an end extending out of the housing is meshed with the output end of the motor installed outside the housing through a reduction gear assembly.

20. A dispensing device, comprising the switcher according to any one of claims 11 to 19, wherein, the openings of the switcher are respectively connected with different waterways for controlling to dispense one or more than one additive to different waterways.

21. A switcher, comprising, a housing, an inside of the housing being a chamber, and a mounting hole being formed on the housing for the rotating rod passing through; wherein,
a part of the rotating rod passing through the mounting hole is provided with two sealing rings, there is a pressure relief chamber between an outer wall of the rotating rod between the two sealing rings and an inner wall of the mounting hole, and a pressure relief port is formed on the housing for communicating the pressure relief chamber with the outside of the chamber.

22. The switcher according to claim 21, wherein, an outer wall of the rotating rod is provided with a groove, and an opening of the groove faces the inner wall of the mounting hole;
the groove is between the two sealing rings, and the groove and the inner wall of the mounting hole forms the pressure relief chamber;
the groove is arranged on the outer wall of the rotating rod, and the groove is extended continuously or discontinuously to form at least one circle.

23. The switcher according to claim 21, wherein, a groove is provided on the inner wall of the mounting hole, the opening of the groove faces the outer wall of the rotating rod, and the groove is between the two sealing rings;
the groove and the outer wall of the rotating rod form the pressure relief chamber, the groove is arranged on the inner wall of the mounting hole, and the groove is at least one circle by extending continuously or discontinuously.

24. The switcher according to any one of claims 21-23, wherein, the outer wall of the two ends of the part where the rotating rod passes through the mounting hole is respectively sleeved with one sealing ring, an inner side and an outer side of the sealing ring are respectively contact with the outer wall of the rotating rod and the inner wall of the mounting hole in a sealed manner;
the sealing ring arranged near to the chamber is as an inner sealing ring, and the sealing ring arranged far away from the chamber is as an outer sealing ring; and
the pressure relief chamber is located between the inner sealing ring and outer sealing ring, and is communicated with the space between the inner and outer sealing ring.

25. The switcher according to claim 24, wherein, the inner wall of the mounting hole is provided with a notch radially and outwardly recessed, and the notch is in the same section with the inner sealing ring for communicating with both sides of the inner sealing ring;
preferably, notches are arranged at intervals on the inner wall of the mounting hole along the circumferential direction.

26. The switcher according to any one of claims 21-25, wherein, the housing of the switcher is provided with a high-pressure chamber and a low-pressure chamber that are independent from each other;
the rotating rod is arranged in the high-pressure chamber, the part of the rotating rod penetrating out the high-pressure chamber is provided with the pressure relief chamber, and the pressure relief port of the pressure relief chamber is communicated with the low-pressure chamber through a pressure relief channel.

27. The switcher according to claim 26, wherein, a second rotating rod is provided in the low-pressure chamber, an end of the second rotating rod is in the outside of the low-pressure chamber, and a sealing ring is provided on the outer peripheral wall of the part of the second rotating rod being in the outside of the low-pressure chamber;
the low-pressure chamber is provided with a communication port for communicating with the pressure relief channel, and the communication port is set close to the center of the low-pressure chamber relative to the sealing ring.

28. The switcher according to claim 26, wherein, the low-pressure chamber communicates with the external atmosphere through the pressure relief port in which the pressure relief valve is installed;
preferably, the pressure relief port is close to the communication port.

29. The switcher according to any one of claims 21-28, wherein, the inside of the housing is a chamber, the openings communicating with the chamber are arranged on the housing, and a rotating rod being capable of rotating around the axis is arranged in the chamber;
the rotating rod is provided with multiple cam portions corresponding to different openings, the cam portions respectively drive the pistons to telescopically move relative to the openings in one-to-one manner, for controlling the sealing structures on the pistons to close or open the openings.

30. A dispensing device, comprising the switcher according to any one of claims 21 to 29, wherein, the openings of the switcher are respectively connected with different waterways for controlling to dispense one or more than one additive to different waterways.
